(19) Europäisches Patentamt
European Patent Office
Office européen des brevets

(11) **EP 2 888 783 B1**

(12) **EUROPÄISCHE PATENTSCHRIFT**

(45) Veröffentlichungstag und Bekanntmachung des Hinweises auf die Patenterteilung:
**25.05.2016 Patentblatt 2016/21**

(21) Anmeldenummer: **13752827.9**

(22) Anmeldetag: **13.08.2013**

(51) Int Cl.:
*H01M 10/48* (2006.01)   *H01M 10/625* (2014.01)
*H01M 10/6564* (2014.01)   *H01M 10/613* (2014.01)
*B60K 6/28* (2007.10)   *B60L 3/00* (2006.01)
*B60L 11/14* (2006.01)   *B60L 11/18* (2006.01)

(86) Internationale Anmeldenummer:
**PCT/EP2013/002420**

(87) Internationale Veröffentlichungsnummer:
**WO 2014/029474 (27.02.2014 Gazette 2014/09)**

(54) **KRAFTFAHRZEUG MIT BATTERIEKÜHLUNG**

MOTOR VEHICLE WITH BATTERY COOLING SYSTEM

VÉHICULE À MOTEUR COMPORTANT UN DISPOSITIF DE REFROIDISSEMENT DE BATTERIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.08.2012 DE 102012016801**

(43) Veröffentlichungstag der Anmeldung:
**01.07.2015 Patentblatt 2015/27**

(73) Patentinhaber: **Audi AG**
**85045 Ingolstadt (DE)**

(72) Erfinder:
• **ACHHAMMER, Siegfried**
**93049 Regensburg (DE)**

• **PÖPPEL, Armin**
**85080 Gaimersheim (DE)**
• **GERLINGER, Uwe**
**85110 Kipfenberg (DE)**

(74) Vertreter: **Herbst, Matthias Heinz**
**Audi AG**
**Patentabteilung**
**I/EZ-14**
**85045 Ingolstadt (DE)**

(56) Entgegenhaltungen:
**EP-A1- 2 216 843      EP-A1- 2 216 849**
**CN-A- 102 386 460      DE-A1- 10 337 493**
**DE-A1-102008 011 466      JP-A- 2011 076 926**
**US-A1- 2011 256 431**

EP 2 888 783 B1

**Beschreibung**

Die Erfindung betrifft ein Kraftfahrzeug, umfassend wenigstens ein Batteriemodul mit einer Kühlvorrichtung.

Vor allen Dingen unter Umweltaspekten gewinnt die Elektromobilität zunehmend an Bedeutung. Während reine Elektrofahrzeuge noch eine untergeordnete Rolle spielen und vor allem für den Verkehr in Innenstädten geeignet sind, finden Hybridfahrzeuge, vor allem auch Mildhybridfahrzeuge eine zunehmende Verbreitung.

Bei typischen Hybridfahrzeugen kommt ein Verbrennungsmotor und ein Elektromotor zum Einsatz. Beim Mildhybrid wirkt der Elektroantriebsanteil unterstützend, das heißt er dient zur Leistungssteigerung des Fahrzeuges. Zudem kann vor allem beim Anfahren oder Beschleunigen Treibstoff gespart werden. Die Batterien werden hier vor allem durch rückgewonnene Energie, beispielsweise durch Bremsen, aufgeladen.

Gerade beim Mildhybrid können Batterien sehr schnell ge- bzw. entladen werden. Da jede Batterie einen Innenwiderstand besitzt, kommt es dabei zu einer Erwärmung der Batterie. Hohe Batterietemperaturen können jedoch die Lebenszeit der Batterien reduzieren. Zudem kann es notwendig sein, die Ladegeschwindigkeit bzw. Entladegeschwindigkeit zu begrenzen, um ein Überhitzen der Batterie zu vermeiden. Daher ist eine Kühlung eines solchen Batteriemoduls vorteilhaft.

Die Druckschrift DE 103 37 493 A1 offenbart ein Verfahren und eine Vorrichtung zum Kühlen einer Fahrzeugbatterie. Die Batterie ist in einem Behälter angeordnet, der mit Ausnahme eines Kühllufteinlasses und eines Luftaustragsdurchlasses im Wesentlichen abgedichtet ist. Es ist ein Luftstutzen vorgesehen, der relativ kalte Luft von außerhalb des Fahrzeuges zum Kühllufteinlass lenkt. Dadurch strömt Luft an der Batterie vorbei und diese wird gekühlt. Durch eine lediglich auf Umgebungsluft beruhende Kühlung können jedoch nur begrenzte Kühlleistungen erreicht werden.

Die DE 10 2008 011 466 A1 offenbart ein Batteriemodul, welches durch komprimiertes Kühlfluid, hier konkret Luft, gekühlt wird. Die Verwendung von komprimierter Luft bietet zwei Vorteile. Zum einen hat diese Luft mehr Masse je Volumeneinheit, wodurch die Kühlleistung erhöht wird. Zum anderen kann das Batteriemodul ein Entspannungsorgan umfassen, wobei es zu einer Kühlung durch Expansion kommen kann. Die Luft wird jedoch durch das Komprimieren erwärmt, so dass dadurch die Kühlleistung nachteilig reduziert wird. Dies wird dadurch vermieden, dass die komprimierte Luft zwischen Kompressor und Batteriemodul gekühlt wird. Als Kühlung wird eine Kältemaschine vorgeschlagen. Eine solche Kühlung ist jedoch energieaufwändig.

Die JP 2 011 076 926 A offenbart eine Fahrzeugbatterie mit Drukluftspeicher und Temperatursensor.

Der Erfindung liegt damit die Aufgabe zugrunde, ein Kraftfahrzeug mit einer demgegenüber effizienteren Kühlvorrichtung für ein Batteriemodul anzugeben.

Zur Lösung dieser Aufgabe ist bei einem Kraftfahrzeug der eingangs genannten Art erfindungsgemäß vorgesehen, dass die Kühlvorrichtung einen Druckspeicher für komprimiertes Gas umfasst, das dem Batteriemodul zur Kühlung zuführbar ist.

Der Erfindung liegt die Idee zugrunde, das Batteriemodul mit Gas aus einem Druckspeicher zu kühlen. Dieser wird durch einen Kompressor befüllt, wodurch das Gas im Druckspeicher zunächst erwärmt ist, bei ausreichender Größe des Druckspeichers wird das Gas jedoch vor Verwendung als Kühlmittel thermalisiert, d. h. an die Umgebungstemperatur angepasst. Durch die längere Zeit, die zwischen Kompression des Gases und Verwendung als Kühlgas vergeht, kann beispielsweise eine rein passive Kühlung des Gases erfolgen, wodurch kein zusätzlicher Energieverbrauch entsteht. Wie bereits beschrieben, ist es vorteilhaft, Gas mit höherem Druck zur Kühlung zu verwenden, da damit eine höhere Dichte des Gases erreicht wird, so dass mehr Energie transportiert werden kann. Dadurch wird die Kühlleistung verbessert. Es kann jedoch auch vorteilhaft sein, das Gas zwischen Druckspeicher und Batteriemodul oder an dem Batteriemodul zu entspannen. Damit ist es möglich, die Temperatur des Gases zu senken.

Es ist möglich, Kühlgase einzusetzen, die bei moderaten Drücken bereits flüssig werden. Dies hat den Vorteil, dass neben der normalen Kühlleistung des Gases zusätzlich noch die Verdampfungswärme abgeführt werden kann. Die meisten Kühlgase, die bei niedrigen Drücken bereits flüssig werden, sind jedoch in der Umgebung nicht vorhanden und häufig giftig oder leicht entflammbar. Damit ist ein geschlossener Kühlkreislauf notwendig.

Alternativ ist jedoch auch eine Verwendung von Umgebungsluft möglich. Diese kann beispielsweise durch einen Luftstutzen im vorderen Bereich des Fahrzeuges aufgenommen werden, wodurch besonders bei hohen Fahrgeschwindigkeiten bereits eine Vorkompression erzielt wird.

Besonders bei einer Kühlung mit komprimierter Umgebungsluft ist eine Kühlung des Batteriemoduls von außen, das heißt durch Anblasen mit komprimiertem Gas möglich. Diese Art der Kühlung ist besonders leicht zu realisieren. Sie hat jedoch den Nachteil, dass die heißesten Teile des Batteriemoduls nicht direkt gekühlt werden können. Es ist also vorteilhaft, ein Batteriemodul so aufzubauen, dass gezielt ein Gasstrom an heißen Teilen vorbeigeführt werden kann.

Es ist besonders vorteilhaft, wenn zwischen dem Druckspeicher und dem Batteriemodul ein Entspannungsorgan, insbesondere eine Drossel, angeordnet ist. Dadurch expandiert das Gas. Dies geschieht typischerweise polytrop. Die Temperaturänderung lässt sich damit nach der Formel

$$T_2 = T_1 \cdot p_2^{(n-1)/n} / p_1^{(n-1)/n}$$

beschreiben. Hier ist $T_2$ die Temperatur nach der Expansion, $T_1$ die Temperatur vor der Expansion, $p_2$ der Druck nach der Expansion, $p_1$ der Druck vor der Expansion, und n eine Konstante, die bei Luft als Medium typischerweise 1,3 ist. Die Temperaturen sind in Kelvin angegeben.

Mit dieser Art der Expansion ist es leicht möglich, einen Gasstrom mit weit unter 0 °C zu erzeugen. Die Drossel kann entweder als feste Drossel ausgebildet sein, oder als steuerbares Drosselventil.

Vor allem im Sinne einer einfacheren Wartung des Kraftfahrzeuges ist es vorteilhaft, wenn das Gas Luft ist. Damit ist kein abgeschlossenes Kühlsystem notwendig. Die Luft wird durch einen Ansaugstutzen aufgenommen und nach der Kühlung direkt in die Umgebungsluft abgeführt. Eine solche Kühlung mit Luft stellt wesentlich geringere Anforderungen an die Dichtigkeit des Systems. Würde beispielsweise ein geschlossener Kühlkreislauf mit Kühlmittel verwendet, so würden schon kleinste Lecks im Kühlkreislauf dazu führen, dass regelmäßig Kühlmittel nachgefüllt werden muss. Ein weiterer Vorteil der Kühlung mit Umgebungsluft ist, dass die Luft, welche nach dem Kühlen des Batteriemoduls deutlich erwärmt ist, direkt in die Umgebung abgegeben werden kann und damit nicht wieder gekühlt werden muss.

Die Erfindung kann besonders einfach verwirklicht werden, wenn das Fahrzeug bereits ein Luftfeder- oder Bremssystem umfasst, welches auf Druckluft basiert. Dann kann der Druckspeicher, der Bestandteil eines fahrzeugseitigen Luftfeder- oder Bremssystems ist, auch als Druckspeicher für die Kühlvorrichtung des Batteriemoduls dienen. Damit sind nur wenige zusätzliche Komponenten für eine Kühlung des Batteriemoduls mit Druckluft notwendig. Es ist kein zusätzlicher Kompressor oder Druckspeicher notwendig, sondern nur zusätzliche Leitungen, eine Drossel und ein Ventil.

Bei dem erfindungsgemäßen Kraftfahrzeug kann es vorteilhaft sein, wenn an einer Zuleitung des Gases zum Druckspeicher und/oder dem Druckspeicher selbst ein passives Kühlelement angeordnet ist, das vorzugsweise Kühlrippen aufweist. Bei einer Verwendung zur Kühlung ist es sehr wichtig, dass das Gas nicht heiß ist. Wenn nun große Mengen Kühlgas verbraucht werden, kann das Gas durch die Komprimierung warm sein. Eine passive Kühlung von Tank oder Zuleitungen kann Abhilfe schaffen. Eine solche rein passive Kühlung ist wartungsfreundlicher, günstiger und einfacher im Kraftfahrzeug zu integrieren, als eine aktive Kühlung, beispielsweise durch eine Kältemaschine. Die Kühlleistung der passiven Kühlung kann weiter verbessert werden, wenn ein vorhandener Kühlluftstrom, beispielsweise zur Kühlung von Komponenten des Motors, auch an diesem passiven Kühlelement vorbeigeführt wird.

Wie beschrieben wird durch eine Kühlung mit Druckluft eine wesentlich verbesserte Kühlleistung für das Batteriemodul erreicht. In vielen Fahrsituationen ist eine hohe Kühlleistung jedoch nicht notwendig. Eine Kühlung des Batteriemoduls durch Umgebungsluft ist energieeffizienter als eine Kühlung durch Druckluft. Daher ist es von Vorteil, wenn das Kraftfahrzeug wenigstens eine Luftzuführungseinrichtung umfasst, die zum Zuführen von Luft aus der Umgebung des Fahrzeuges zum Batteriemodul ausgebildet ist. So ist es möglich, in Fahrsituationen, in denen keine intensive Kühlung notwendig ist, die Batterie durch einen Luftstutzen als Luftzuführungseinrichtung und somit durch Fahrtwind zu kühlen.

Es ist auch vorteilhaft, wenn bei dem erfindungsgemäßen Kraftfahrzeug die Kühlung der Batterie durch geregelte Zufuhr von Druckluft erfolgt. Daher kann das Kraftfahrzeug eine Steuereinrichtung umfassen, die zur Steuerung der Zuführung von Gas aus dem Druckspeicher zum Batteriemodul in Abhängigkeit mindestens eines Ausgabewerts mindestens eines Sensors ausgebildet ist. Damit kann in allen Fahrsituationen eine ausreichende Kühlung des Batteriemoduls gewährleistet werden, jedoch der Energieaufwand, der zur Kompression des Gases notwendig, minimiert werden. Der Sensor kann ein am Batteriemodul angeordneter Temperatursensor sein. Damit ist eine einfache Regelung möglich. Übersteigt die Temperatur der Batterie beispielsweise einen festgelegten Wert, so kann die Kühlung aktiviert werden. Andererseits ist es auch möglich, dass die Zuführung von Druckluft kontinuierlich regelbar ist. Dann kann die Steuereinrichtung je nach Temperatur die zugeführte Menge Druckluft optimal dosieren.

Erfindungsgemäß ist der Sensor zur Messung der Stromabgabe des Batteriemoduls ausgebildet. Gibt die Batterie mehr Strom ab, so führt dies zu einer stärkeren Erwärmung. Eine direkte Messung des Stroms hat den Vorteil, dass eine Erhöhung der Batterietemperatur nicht nachträglich durch Zufuhr von mehr Druckluft rückgängig gemacht wird, sondern dass eine Erhöhung der Batterietemperatur vermieden wird. Dies kann die Lebenszeit der Batterie weiter verbessern. Selbstverständlich ist auch eine Kombination mehrerer Sensoren möglich. So kann ein Temperatursensor sicherstellen, dass gewisse Grenztemperaturen zuverlässig nicht über- oder unterschritten werden und ein Stromsensor kann große Schwankungen der Temperatur verhindern.

Beim erfindungsgemäßen Fahrzeug kann es sich um ein Hybridfahrzeug handeln, das sowohl einen Verbrennungs-, als auch einen Elektromotor umfasst. Gerade bei Hybridfahrzeugen findet häufig ein schnelles Laden und Entladen der Batterien statt. Daher ist eine Kühlung der Batterie besonders wichtig.

Weitere Vorteile und Einzelheiten der vorliegenden Erfindung ergeben sich aus dem im folgenden beschrieben Ausführungsbeispiel sowie anhand der Zeichnungen. Dabei zeigen:

Fig. 1 ein Ausführungsbeispiel eines erfindungsgemäßen Kraftfahrzeugs, und

Fig. 2     einen Pneumatikplan eines Luftfedersystems, der um eine Batteriekühlung erweitert ist, des erfindungsgemäßen Kraftfahrzeugs.

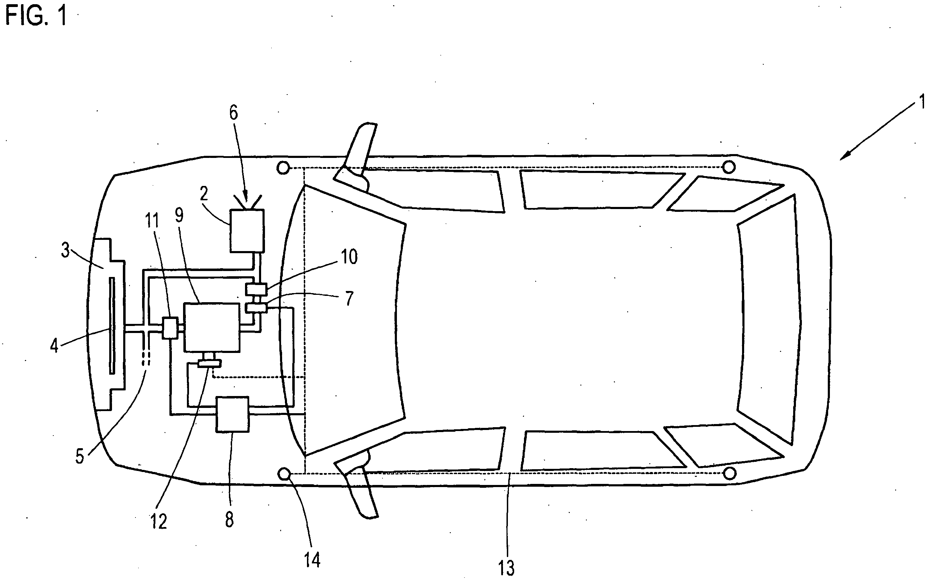

Fig. 1 zeigt ein Ausführungsbeispiel eines Kraftfahrzeugs 1 mit einer Kühlvorrichtung für ein Batteriemodul 2. Das Batteriemodul 2 kann zusätzlich zur Kühlung durch eine konventionelle Lüftung 3 mit Lüfter 4 mit Druckluft gekühlt werden. In diesem Fall wird das Ventil 7 durch die Steuereinrichtung 8 geöffnet und dem Batteriemodul 2 wird Druckluft aus dem Druckspeicher 9 zugeführt. Zwischen Druckspeicher 9 und Batteriemodul 2 ist zudem eine Drossel 10 angeordnet. Diese begrenzt den Gasfluss. Damit kommt es im nachfolgenden Rohr zu einer Expansion des Gases, und somit zu einer Kühlung. Das Gas wird dem Batteriemodul 2 mit Überdruck zugeführt, durchströmt das Batteriemodul 2 und wird am Abluftauslass 6 wieder in die Umgebung abgegeben. Der Druckspeicher 9 ist Teil des Luftfedersystems. Über ein Ventil 12 ist er mit der Pneumatik 13 des Luftfedersystems verbunden. Die Pneumatik 13 des Luftfedersystems kann den einzelnen Luftfedern 14 gezielt Druckluft zuführen, oder sie kann Druckluft aus den Druckfedern ablassen. Die Steuerung erfolgt ebenfalls durch die Steuereinrichtung 8. Die Steuereinrichtung 8 kann einen Kompressor 11 aktivieren, um Gas aus der Lüftung 3 in den Druckspeicher 11 zu pumpen.

Im weiteren soll kurz abgeschätzt werden, welche Kühlleistung mit einem solchen System erzielt werden kann. An der Drossel 10 erfolgt eine polytrope Zustandsänderung. Mit der Formel

$$T_2 = T_1 \cdot p_2^{(n-1)/n} / p_1^{(n-1)/n}$$

kann aus der Eingangstemperatur $T_1$ und dem Eingangsdruck $p_1$, sowie dem Ausgangsdruck $p_2$ die Ausgangstemperatur $T_2$ errechnet werden, wobei für Luft als Medium n typischerweise 1,3 ist.

Wird im Hochdruckteil des Systems ein Druck von 5 bar (= 0,5 N/mm$^2$) angenommen, und für den Umgebungsdruck 1 bar und wird zudem angenommen, dass die Druckluft aus dem Drucklufttank 50 °C warm ist, so kann, unter der Berücksichtigung, dass alle Temperaturen in der Formel in Kelvin angegeben werden, eine Ausgangstemperatur von -50 °C errechnet werden. Wird nun ein Liter Luft pro Sekunde zur Kühlung der Batterie eingesetzt, so lässt sich die abgeführte Wärme als Produkt der Masse des Kühlmittels mit der Wärmekapazität des Kühlmittels und dem Temperaturunterschied berechnen. Bei einer Temperatur der Batterie von ca. 40° entspricht der Temperaturunterschied 90 °C. Die Wärmeabfuhr lässt sich somit zu 111,2 Watt berechnen. Da die Luftfederanlagen von Fahrzeugen mit Systemdrücken von typischerweise ca. 8 bar arbeiten, kann die oben genannte Kühlleistung leicht übertroffen werden.

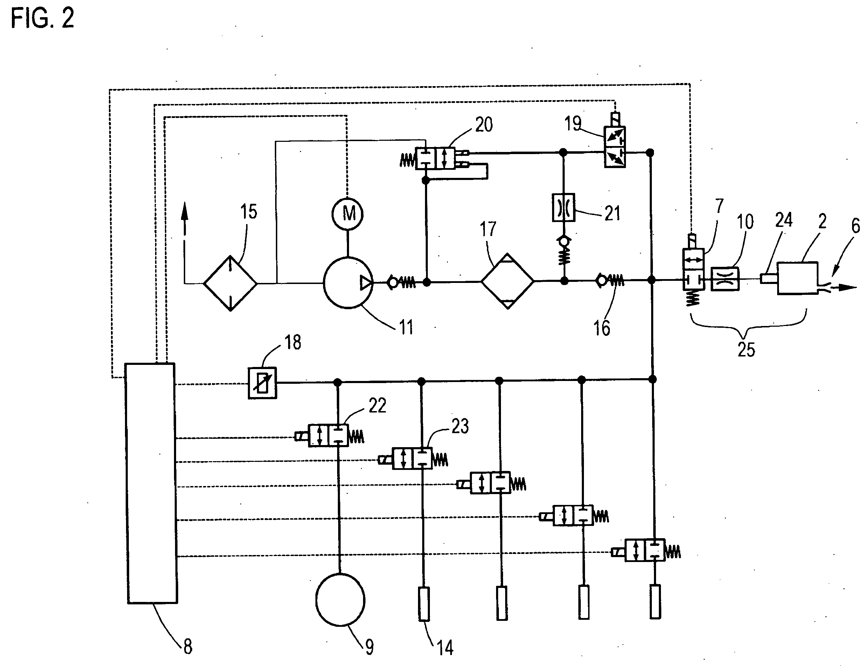

Fig. 2 zeigt einen Pneumatikplan eines Luftfedersystems, der um eine Batteriekühlung erweitert wurde. Hier wird Umgebungsluft über einen Zusatzgeräuschdämpfer 15 einem Kompressor 11 zugeführt und von diesem verdichtet. Über ein Rückschlagventil 16 wird die Luft in dem Hochdruckteil des Pneumatiksystems gedrückt. Hier durchläuft sie zunächst einen Lufttrockner 17.

Der Druck wird ständig durch einen Drucksensor 18 überwacht, der den momentanen Druck an die Steuereinrichtung 8 überträgt. Wird ein zu hoher Druck festgestellt, so kann die Steuereinrichtung 8 ein elektrisches Ablassventil 19 öffnen und Druck aus dem System ablassen. Das Ablassen des Drucks erfolgt über eine Ablassdrossel 21. Zudem ist ein pneumatisches Ablassventil vorgesehen, das bei Überschreiten eines gewissen Drucks im System mechanisch zum Ablassen von Luft führt. Ist der Druck im System geringer als notwendig, kann die Steuereinrichtung den Kompressor 11 aktivieren, um den Druck im System zu erhöhen. Zur Speicherung von Druckluft ist ein Druckspeicher 9 vorgesehen. Hier kann die komprimierte Luft lagern und kühlen, und bei Bedarf den Luftfedern 14 oder dem Batteriemodul 2 zugeführt werden.

Soll Druckluft im Druckspeicher 9 gespeichert werden, so wird durch die Steuereinrichtung 8 der Kompressor 11 aktiviert, und damit komprimierte Luft in dem System erzeugt, wodurch der Druck erhöht wird. Ist der Druck nun höher als der Druck im Druckspeicher 9, so kann das Ventil 22 für den Druckspeicher 9 geöffnet werden und Luft fließt in den Druckspeicher. Umgekehrt kann bei einem Druck im Pneumatiksystem, der kleiner ist als der Druck im Druckspeicher das Ventil 22 geöffnet werden, um Druckluft vom Druckspeicher in das System zu bringen und damit den Druck zu erhöhen.

Nach dem gleichen Prinzip kann Druckluft durch Ventile 23 in die Luftfedern 14 oder aus den Luftfedern 14 befördert werden.

Mit sehr wenigen Bauteilen kann das System nun erweitert werden, um auch ein Batteriemodul 2 zu kühlen. Der Bereich 25 der Batteriekühlung ist in der Zeichnung markiert. Wird das Ventil 7 durch die Steuereinrichtung 8 geöffnet, so strömt Luft aus dem Hochdruckteil des Systems durch die Drossel 10 und wird dort expandiert. Damit erfolgt wie zuvor beschrieben eine starke Abkühlung des Gases. Das kalte Gas fließt nun durch den Lufteinlass 24 in das Batteriemodul 2. Im Batteriemodul 2 ist eine Führung des Gases vorgesehen, so dass die besonders heißen Stellen des Batteriemoduls besonders stark von Luft umströmt werden. Diese besonders heißen Stellen sind vor allen Dingen Kontakte. Anschließend wird die Luft am Luftauslass in die Umgebung abgegeben.

**Patentansprüche**

1.   Kraftfahrzeug (1) umfassend wenigstens ein Batteriemodul (2) mit einer Kühlvorrichtung, wobei die Kühlvorrichtung einen Druckspeicher (9) für komprimiertes Gas umfasst, das dem Batteriemodul (2) zur Kühlung zuführbar ist, wobei das Kraftfahrzeug (1) eine Steuereinrichtung (8) umfasst, die zur Steuerung der Zuführung von Gas aus dem Druckspeicher (9) zum Batteriemodul (2) in Abhängigkeit mindestens eines Ausgabewerts mindestens eines Sensors ausgebildet ist,
**dadurch gekennzeichnet,**
**dass** der Sensor zur Messung der Stromabgabe des Batteriemoduls (2) ausgebildet ist.

2. Kraftfahrzeug nach Anspruch 1,
**dadurch gekennzeichnet,**
**dass** zwischen dem Druckspeicher (9) und dem Batteriemodul (2) ein Entspannungsorgan (10), insbesondere eine Drossel, angeordnet ist.

3. Kraftfahrzeug nach Anspruch 1 oder 2,
**dadurch gekennzeichnet,**
**dass** das Gas Luft ist.

4. Kraftfahrzeug nach einem der vorangehenden Ansprüche,
**dadurch gekennzeichnet,**
**dass** der Druckspeicher (9) Bestandteil eines fahrzeugseitigen Luftfeder- oder Bremssystems ist.

5. Kraftfahrzeug nach einem der vorangehenden Ansprüche,
**dadurch gekennzeichnet,**
**dass** an einer Zuleitung des Gases zum Druckspeicher (9) und/oder dem Druckspeicher (9) ein passives Kühlelement angeordnet ist, das vorzugsweise Kühlrippen aufweist.

6. Kraftfahrzeug nach einem der vorangehenden Ansprüche,
**dadurch gekennzeichnet,**
**dass** es wenigstens eine Luftzuführungseinrichtung (3) umfasst, die zum Zuführen von Luft aus der Umgebung des Fahrzeugs zum Batteriemodul ausgebildet ist.

7. Kraftfahrzeug nach einem der vorangehenden Ansprüche,
**dadurch gekennzeichnet,**
**dass** das Kraftfahrzeug ein Hybridfahrzeug ist, das sowohl einen Verbrennungs- als auch einen Elektromotor umfasst.

**Claims**

1. Motor vehicle (1) comprising at least a battery module (2) with a cooling device, whereby the cooling device comprises a pressure reservoir (9) for compressed gas, which is supplied to the battery module (2) for cooling, whereby the motor vehicle (1) comprises a control device (8) for controlling the supply of gas from the pressure reservoir (9) to the battery module (2), depending on at least one output value from at least one sensor,
**characterized in**
**that** the sensor is designed to measure the current output of the battery module (2).

2. A motor vehicle according to claim 1,
**characterized in**
**that** between the pressure reservoir (9) and the battery module (2), a decompression device (10) is arranged, in particular, a throttle.

3. A motor vehicle according to claim 1 or 2,
**characterized in**
**that** the gas is air.

4. A motor vehicle according to one of the preceding claims,
**characterized in**
**that** the pressure reservoir (9) is part of a vehicle-based air spring or brake system.

5. A motor vehicle according to one of the preceding claims,
**characterized in**
**that** on a gas supply line to the pressure reservoir (9) and/or the pressure reservoir (9) a passive cooling element is arranged, which preferably has cooling ribs.

6. A motor vehicle according to one of the preceding claims,
**characterized in**
**that** it comprises at least one air supply device (3), which is designed for supplying air from the surroundings of the vehicle to the battery module.

7. A motor vehicle according to one of the preceding claims,
**characterized in**
**that** the motor vehicle is a hybrid vehicle that includes both an internal combustion engine and an electric motor.

**Revendications**

1. Véhicule automobile (1) comprenant au moins un module de batterie (2) avec un dispositif de refroidissement, dans lequel le dispositif de refroidissement comprend un accumulateur de pression (9) pour du gaz comprimé, qui peut être fourni au module de batterie (2) pour le refroidissement, dans lequel le véhicule automobile (1) comprend un dispositif de commande (8) qui est conçu pour commander la fourniture de gaz de l'accumulateur de pression (9) au module de batterie (2) en fonction au moins d'une valeur de sortie au moins d'un capteur, **caractérisé en ce que** :

le capteur est conçu pour mesurer le débit de courant du module de batterie (2).

2. Véhicule automobile selon la revendication 1, **caractérisé en ce que** :

un organe de détente (10), en particulier un dispositif d'étranglement, est installé entre l'accumulateur de pression (9) et le module de batterie (2).

3. Véhicule selon la revendication 1 ou la revendication 2, **caractérisé en ce que** :

le gaz est de l'air.

4. Véhicule automobile selon l'une quelconque des revendications précédentes, **caractérisé en ce que** :

l'accumulateur de pression (9) fait partie d'un système d'amortissement pneumatique ou de freinage côté véhicule.

5. Véhicule automobile selon l'une quelconque des revendications précédentes, **caractérisé en ce que** :

un élément de refroidissement passif, qui présente de préférence des ailettes de refroidissement, est aménagé dans une canalisation de gaz menant à l'accumulateur de pression (9) et/ou revenant de l'accumulateur de pression (9).

6. Véhicule automobile selon l'une quelconque des revendications précédentes, **caractérisé en ce que** :

il comprend au moins un dispositif. d'acheminement d'air (3) qui est conçu pour acheminer de l'air de l'environnement du véhicule au module de batterie.

7. Véhicule automobile selon l'une quelconque des revendications précédentes, **caractérisé en ce que** :

le véhicule automobile est un véhicule hybride, qui comprend autant un moteur à combustion qu'un moteur électrique.

FIG. 1

EP 2 888 783 B1

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10337493 A1
- DE 102008011466 A1
- JP 2011076926 A